(19) Europäisches Patentamt
European Patent Office
Office européen des brevets

(11) Numéro de publication: **0 093 218**
**B1**

(12) **FASCICULE DE BREVET EUROPEEN**

(45) Date de publication du fascicule du brevet: **03.09.86**

(21) Numéro de dépôt: **82420155.2**

(22) Date de dépôt: **15.11.82**

(51) Int. Cl.$^4$: **C 22 C 38/04**, C 21 D 9/00, C 21 D 8/06, F 16 B 33/00

# (54) Vis et boulons en acier à hautes caractéristiques mécaniques et procédé d'élaboration de ces vis et boulons.

(30) Priorité: **22.04.82 FR 8207282**

(43) Date de publication de la demande:
**09.11.83 Bulletin 83/45**

(45) Mention de la délivrance du brevet:
**03.09.86 Bulletin 86/36**

(84) Etats contractants désignés:
**AT BE CH DE FR GB IT LI LU NL SE**

(56) Documents cités:
**DE-A-2 620 449**
**DE-A-2 635 188**
**FR-A-2 187 922**
**FR-A-2 231 758**
**FR-A-2 400 067**
**GB-A-1 128 527**
**GB-A-2 019 439**
**SU-A- 522 261**

(73) Titulaire: **UGINE ACIERS**
**Immeuble Elysée La Défense 4, Le Parvis 29**
**F-92800 Puteaux (FR)**

(72) Inventeur: **Heritier, Bernard**
**23, rue Victor Hugo**
**F-73200 Albertville (FR)**
Inventeur: **Maitrepierre, Philippe**
**Le Paradis Route de Pallud**
**F-73200 Albertville (FR)**
Inventeur: **Rofes-Vernis, Jaime**
**7, rue H. Daumier**
**F-13290 St. Mitre-les-Remparts (FR)**
Inventeur: **Wyckaert, Alain**
**18 Bd. Fontaine du Loup**
**F-13290 St. Mitre-les-Remparts (FR)**

(74) Mandataire: **Séraphin, Léon et al**
**PECHINEY 28, rue de Bonnel**
**F-69433 Lyon Cedex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 093 218 B1

**Description**

L'invention concerne des vis, boulons, écrous, ou tous autres moyens de fixation en acier et aussi toutes autres pièces en acier à hautes caractéristiques mécaniques obtenues par matriçage à froid ou à tiède à partir de fil ou de rond laminé à chaud.

L'invention concerne plus particulièrement des vis, boulons, écrous ou autres pièces de fixation présentant une charge de rupture supérieure à 800 MPa, une grande ductilité, une grande résistance à la fissuration et à la fatigue, obtenus par matriçage à froid ou à tiède à partir de fil machine laminé à chaud sans traitement thermique ultérieur.

Enfin, l'invention concerne également des vis, boulons, écrous ou tous autres moyens de fixation ayant une charge de rupture supérieure à 800 MPa et une structure à prédominance bainitique à l'état d'utilisation, obtenus par matriçage à froid ou a tiède à partir de fil ou de rond laminé.

De la façon la plus courante, les vis, boulons, écrous ou autres pièces de fixation à haute résistance mécanique sont réalisés à partir d'acier à teneur en carbone moyenne tel que, par exemple, un acier 32C4, norme NFA 35551 dont la composition est la suivante en % en masse: C 0,30 à 0,35; Mn 0,60 à 0,90; Si 0,10 à 0,40; Cr 0,85 à 1,15. La transformation de cet acier comporte habituellement les étapes suivantes: transformation à chaud à partir d'un lingot ou d'une barre de coulée continue et obtention par laminage à chaud d'un fil ou d'un rond d'un diamètre le plus souvent compris entre 8 et 24 mm. Après un recuit éventuel de sphéroïdisation, ce fil est éventuellement calibré par tréfilage à froid puis transformé par estampage, matriçage, ou frappe à froid en vis, boulons, écrous ou autres pièces de fixation. On réalise ensuite, par usinage ou roulage, les filetages nécessaires. Enfin, la pièce ainsi réalisée subit un traitement thermique de trempe et revenu destiné à lui conférer les caractéristiques mécaniques désirées. Des traitements de finition sont éventuellement appliqués aux pièces traitées pour améliorer leur aspect ou encore leur précision.

Bien que les produits ainsi obtenus donnent généralement satisfaction, on a recherché la possibilité de simplifier leur procédé d'obtention, en particulier en supprimant le traitement thermique final. Celui-ci doit, en effet, être effectué avec beaucoup de précision et en atmosphère contrôlée si on désire obtenir des caractéristiques mécaniques reproductibles et éviter la décarburation superficielle. Il s'agit donc d'une opération coûteuse, en particulier en ce qui concerne la consommation d'énergie, et qui, de plus, peut nuire à la précision et à la qualité de présentation des pièces obtenues.

Il a été proposé d'éviter la nécessité d'un tel traitement thermique final en faisant appel à un acier présentant à l'état brut de laminage des caractéristiques mécaniques plus élevées de façon que le simple écrouissage après le tréfilage, suivi du matriçage, lui confère les caractéristiques voulues, sans nécessiter de traitement thermique final.

C'est ainsi que, au Congrès de Cincinnati d'Octobre 1980, de l'International Wire Association, HISASHI GONDOH et al (NIPPON STEEL Corp) ont décrit deux nuances d'acier permettant de réaliser des boulons à hautes caractéristiques mécaniques à partir de fil machine étiré puis frappé à froid, sans traitement thermique.

Le tableau I ci-dessous donne la composition de ces deux nuances:

| Désignation | C | Si | Mn | P | S | Al | Ti | B | Nb |
|---|---|---|---|---|---|---|---|---|---|
| NHF 60 | 0,13 | 0,25 | 1,35 | 0,025 | 0,015 | 0,02 | — | — | 0,04 |
| NHF 90 | 0,08 | 0,70 | 1,65 | 0,020 | 0,012 | 0,01 | 0,10 | 0,0025 | — |

Ces aciers ont été transformés à chaud par laminage puis étirés à froid. Les résultats des essais mécaniques montrent que pour un taux d'écrouissage d'environ 20% par étirage à froid, on obtient 790 à 860 MPa de charge de rupture dans le cas de la nuance NHF60 et 1080 à 1100 MPa de charge de rupture dans le cas de la nuance NHF90.

On voit que ces deux nuances et, plus particulièrement, la deuxième, permettent d'obtenir des caractéristiques très élevées par simple écrouissage.

Cependant, la nuance NHF 90, dont les caractéristiques mécaniques très élevées sont dues à une addition de Ti et de B ne convient pas à la réalisation par matriçage à froid de boulons comportant une tête, à cause probablement d'une ductilité insuffisante. Il est connu, en effet, que l'addition de titane dans ce type d'acier tend à réduire la ductilité par la formation de nitrures et de carbures de titane qui ont une action fragilisante.

On a donc recherché la possibilité d'éviter les additions de titane dans des aciers faiblement alliés à bas carbone, de façon à conserver une très grande ductilité, tout en obtenant, par un matriçage à froid ou à tiède, précédé éventuellement d'un tréfilage, sans aucun recuit intermédiaire, et sans traitement thermique ultérieur, des vis, boulons ou écrous à hautes caractéristiques mécaniques présentant en même temps une ductilité élevée. On a recherché, en particulier, la possibilité de réaliser ainsi des boulons comportant une tête formée par matriçage à froid et ayant une charge de rupture supérieure à 800 MPa, à l'état brut de matriçage tout en présentant une excellente ductilité et une excellente résistance à la fissuration et à la fatigue.

On a eu l'idée, suivant l'invention, de faire appel, pour la réalisation de ces vis, boulons, écrous ou autres pièces en acier à hautes caractéristiques mécaniques, à un acier présentant la composition suivante en % en masse: C 0,060 à 0,120 et de préférence 0,080 à 0,110; Si 0,30 à 0,70; Mn 1,30 à 2,00 et de préférence 1,50 à 1,80; Nb 0,050 à 0,100; B 0,0025 à 0,0060; Al 0,040 à 0,080; N $\leqslant$ 0,010; reste Fe et impuretés habituelles. Cet acier étant le plus souvent élaboré à partir de ferrailles, il peut contenir d'assez nombreuses impuretés métalliques telles que Ni, Cr, Cu, Mo, la quantité totale des impuretés métalliques ne dépassant pas environ 1%.

On constate qu'un tel acier est particulièrement apte à la transformation par matriçage à froid, précédée éventuellement d'un tréfilage, grâce à une combinaison de caractéristiques mécaniques qui associe une résistance élevée à une grande ductilité.

Suivant les teneurs en éléments d'addition, à l'intérieur des fourchettes de composition, il est, en effet, facile d'obtenir des charges de rupture de l'ordre de 600 à 750 MPa à l'état brut de laminage à chaud puis, après un matriçage à froid, précédé éventuellement d'un étirage à froid d'environ 30 à 50%, on obtient facilement une charge de rupture comprise entre 800 et 1000 MPa.

L'une des raisons des performances particulières de cet acier à l'état écroui, est sa structure à prédominance bainitique très fine et homogène. C'est la finesse et l'homogénéité de cette structure, due à l'action combinée de l'addition de niobium et de bore dans un acier à bas carbone, qui lui confère une aptitude particulière au matriçage à froid, ou encore à tiède. Cette structure est obtenue grâce à la réalisation d'un fil par laminage continu à chaud d'une billette de section carrée d'environ 70 à 150 mm de côté, provenant de la transformation d'un lingot ou d'une barre de coulée continue, à une température comprise entre 1150 et 900°C, le fil obtenu étant refroidi de façon contrôlée et relativement rapide jusqu'au-dessous de 600°C. On peut en particulier déposer le fil au fur et à mesure de sa formation sur un convoyeur en spires décalées et accélérer, si besoin est, son refroidissement par un soufflage d'air modéré. Il est donc possible, au moyen de cet acier, de former des boulons comportant une tête à partir d'un fil machine, brut de laminage à chaud ou ayant subi un étirage à froid, présentant une charge de rupture supérieure à 800 MPa. Les charges de rupture mesurées sur les boulons ainsi formés atteignent couramment des valeurs de 900 à 1000 MPa et même davantage, la ductilité demeurant cependant suffisante pour que le boulon puisse subir avec succès les essais normalisés et en particulier l'essai de cale biaise (Norme NF E27—005).

L'exemple ci-après décrit un mode de réalisation non limitatif d'un boulon suivant l'invention.

On élabore un acier ayant la composition en % en masse: C 0,085; Si 0,45; Mn 1,52; Nb 0,060; B 0,0049; Al 0,071; N 0,007; Ni 0,14; Cr 0,17; Cu 0,22; Mo 0,05; S 0,028; P 0,017; reste Fe et impuretés habituelles.

Après coulée en lingot et transformation en billettes de section carrée d'environ 100 mm de côté, par des méthodes bien connues de l'homme de l'art, cet acier est laminé en continu à chaud à température comprise entre 1150 et 900°C, jusqu'à obtention d'un fil machine de 11,5 mm de diamètre qui subit un refroidissement contrôlé jusqu'à une température inférieure à 600°C.

Des prélèvements micrographiques effectués à ce stade montrent une structure à prédominance bainitique fine et homogène ayant une grosseur de grain d'environ 9 ASTM. Ce fil est ensuite étiré à froid jusqu'à un diamètre de 8 mm, c'est-à-dire avec un taux de réduction d'environ 50%. Les essais mécaniques effectués à l'état brut de laminage, puis à l'état étiré donnent les résultats suivants:

| | Charge de rupture R(MPa) | Striction Z(%) |
|---|---|---|
| Brut de laminage | 630 | 65 |
| Etiré | 875 | 45 |

On voit qu'à ce stade, les fils écrouis ont une charge de rupture nettement supérieure à 800 MPa associée à une ductilité élevée. Ces fils sont ensuite directement transformés en boulons par matriçage à froid.

Ce matriçage peut aussi être avantageusement effectué à tiède à une température de préférence comprise entre 100 et 300°C.

De très nombreuses variantes peuvent être apportées au procédé de réalisation de vis, boulons, écrous ou autres pièces en acier à hautes caractéristiques mécaniques qui vient d'être décrit, sans sortir du domaine de l'invention.

**Revendications**

1. Vis, boulons, écrous et toutes autres pièces en acier à hautes caractéristiques mécaniques obtenus par matriçage à froid ou à tiède à partir de fil ou de rond laminé, caractérisés en ce qu'ils ont la composition suivante en % en masse: C 0,060 à 0,120; Si 0,30 à 0,70; Mn 1,30 à 2,00; Nb 0,050 à 0,100; B 0,0025 à 0,0060; Al 0,040 à 0,080; N ≤ 0,010; impuretés habituelles parmi lesquelles le total des impuretés métalliques telles que Ni, Cr, Cu, Mo ne dépasse pas 1,0; reste Fe.

2. Vis, boulons, écrous et toutes autres pièces en acier à hautes caractéristiques mécaniques obtenus à partir de fil ou de rond laminé, suivant revendication 1, caractérisés en ce qu'ils contiennent en % en masse: C 0,080 à 0,110 et Mn 1,50 à 1,80.

3. Procédé de réalisation de vis, boulons, écrous et autres pièces en acier à hautes caractéristiques mécaniques, caractérisé en ce qu'on élabore un acier ayant la composition suivante en % en masse: C 0,060 à 0,120; Si 0,30 à 0,70; Mn 1,30 à 2,00; Nb 0,050 à 0,100; B 0,0025 à 0,0060; Al 0,040 à 0,080; N ≤ 0,010; impuretés habituelles parmi lesquelles le total des impuretés métalliques telles que Ni, Cr, Cu, Mo ne dépasse pas 1,0, et en ce qu'on transforme cet acier par laminage à chaud suivi d'un refroidissement contrôlé, puis d'un matriçage précédé éventuellement d'un étirage à froid.

4. Procédé suivant revendication 3, caractérisé en ce que l'acier élaboré contient en % en masse: C 0,080 à 0,110 et Mn 1,50 à 1,80.

5. Procédé suivant revendication 3 ou 4, caractérisé en ce que la transformation à chaud comporte un laminage final continu à chaud d'une billette de section carrée à une température comprise entre 1150 et 900°C, jusqu'à obtention d'un fil d'environ 8 à 24 mm de diamètre, ce fil étant ensuite refroidi de façon contrôlée jusqu'à une température inférieure à 600°C.

6. Procédé suivant revendication 5, caractérisé en ce que le contrôle du refroidissement est en particulier effectué par soufflage d'air sur le fil.

7. Procédé suivant l'une des revendications 3 à 6, caractérisé en ce que le matriçage est effectué à une température voisine de l'ambiante.

8. Procédé suivant l'une des revendications 3 à 6, caractérisé en ce que le matriçage est effectué à température comprise entre 100 et 300°C.

**Patentansprüche**

1. Schrauben, Bolzen, Muttern und alle anderen Stücke aus Stahl mit hohen mechanischen Eigenschaften, die durch Kalt- oder Lauwarm-Gesenkschmieden von Draht oder gewalztem Rundmaterial erhalten sind, dadurch gekennzeichnet, daß sie die folgende Zusammensetzung in Gewichtsprozent haben: C 0,060 bis 0,120; Si 0,30 bis 0,70; Mn 1,30 bis 2,00; Nb 0,050 bis 0,100; B 0,0025 bis 0,0060; Al 0,040 bis 0,080; N ≤ 0,010; übliche Verunreinigungen, unter denen die Gesamtheit der metallischen Verunreinigungen, wie z.B. Ni, Cr, Cu, Mo, 1,0 nicht übersteigt; Rest Fe.

2. Schrauben, Bolzen, Muttern und alle anderen Stücke aus Stahl mit hohen mechanischen Eigenschaften, die aus Draht oder gewalztem Rundmaterial erhalten sind, nach Anspruch 1, dadurch gekennzeichnet, daß sie in Gewichtsprozent enthalten: C 0,080 bis 0,110 und Mn 1,50 bis 1,80.

3. Verfahren zur Herstellung von Schrauben, Bolzen, Muttern und anderen Stücken aus Stahl mit hohen mechanischen Eigenschaften, dadurch gekennzeichnet, daß man einen Stahl erzeugt, der die folgende Zusammensetzung in Gewichtsprozent hat: C 0,060 bis 0,120; Si 0,30 bis 0,70; Mn 1,30 bis 2,00; Nb 0,050 bis 0,100; B 0,0025 bis 0,0060; Al 0,040 bis 0,080; N ≤ 0,010; übliche Verunreinigungen, unter denen die Gesamtheit der metallischen Verunreinigungen, wie z.B. Ni, Cr, Cu, Mo, 1,0 nicht übersteigt, und daß man diesen Stahl durch Warmwalzen mit nachfolgender gesteuerter Abkühlung und danach durch ein Gesenkschmieden, dem eventuell ein Kaltziehen vorausgeht, umformt.

4. Verfahren nach Anspruch 3, dadurch gekennzeichnet, daß der erzeugte Stahl in Gewichtsprozent enthält: C 0,080 bis 0,110 und Mn 1,50 bis 1,80.

5. Verfahren nach Anspruch 3 oder 4, dadurch gekennzeichnet, daß die Warmumformung ein kontinuierliches Endwarmwalzen eines Knüppels quadratischen Querschnitts bei einer Temperatur im Bereich von 1150 bis 900°C bis zum Erhalten eines Drahtes von etwa 8 bis 24 mm Durchmesser vorsieht, welcher Draht anschliessend in gesteuerter Weise bis auf eine Temperatur unter 600°C abgekühlt wird.

6. Verfahren nach Anspruch 5, dadurch gekennzeichnet, daß die Steuerung der Abkühlung insbesondere durch Blasen von Luft auf den Draht vorgenommen wird.

7. Verfahren nach einem der Ansprüche 3 bis 6, dadurch gekennzeichnet, daß das Gesenkschmieden bei einer der Umgebungstemperatur nahen Temperatur durchgeführt wird.

8. Verfahren nach einem der Ansprüche 3 bis 6, dadurch gekennzeichnet, daß das Gesenkschmieden bei einer Temperatur im Bereich von 100 bis 300°C durchgeführt wird.

**Claims**

1. Screws, bolts, nuts and other components of steel with high mechanical characteristics which are produced by cold or warm die forging from rolled bar or wire characterised in that they are of the following composition in percent by weight: 0.060 to 0120; Si 0.30 to 0.70; Mn 1.30 to 2.00; Nb 0.050 to 0.100;

B 0.0025 to 0.0060; Al 0.040 to 0.080; N ≤ 0.010; the usual impurities among which the total of the metallic impurities such as Ni, Cr, Cu and Mo does not exceed 1.0; and the balance Fe.

2. Screws, bolts, nuts and other components of steel with high mechanical characteristics which are produced from rolled bar or wire according to claim 1 characterised in that they contain in percent by weight: C 0.080 to 0.110 and Mn 1.50 to 1.80.

3. A process for the manufacture of screws, bolts, nuts and other components of steel with high mechanical characteristics characterised by producing a steel of the following composition in percent by weight: C 0.060 to 0.120; Si 0.30 to 0.70; Mn 1.30 to 2.00; Nb 0.050 to 0.100; B 0.0025 to 0.0060; Al 0.040 to 0.080; N ≤ 0.010; the usual impurities among which the total of the metallic impurities such as Ni, Cr, Cu and Mo does not exceed 1.0, and then transforming that steel by hot rolling followed by controlled cooling and then a die forging operation optionally preceded by a cold drawing operation.

4. A process according to claim 3 characterised in that the steel produced contains in percent by weight: C 0.080 to 0.110 and Mn 1.50 to 1.80.

5. A process according to claim 3 or claim 4 characterised in that the hot transformation operation comprises a final continuous hot rolling operation carried out on a billet of square section at a temperature of between 1150 and 900°C until a wire of approximately 8 to 24 mm in diameter is produced, said wire then being cooled controlledly to a temperature of lower than 600°C.

6. A process according to claim 5 characterised in that control of the cooling operation is effected in particular by blowing air on to the wire.

7. A process according to one of claims 3 to 6 characterised in that the die forging operation is carried out at a temperature close to ambient temperature.

8. A process according to one of claims 3 to 6 characterised in that the die forging operation is carried out at a temperature of between 100 and 300°C.